# EUROPÄISCHE PATENTSCHRIFT

(11) **EP 2 870 108 B1**
(45) Veröffentlichungstag und Bekanntmachung des Hinweises auf die Patenterteilung: **02.05.2018**
(21) Anmeldenummer: 13732932.2
(22) Anmeldetag: 01.07.2013
(51) Int. Cl.: C02F 1/38, C02F 11/12, C02F 101/32

(54) **ANLAGE UND VERFAHREN ZUR AUFARBEITUNG VON BILGEWASSER UND SCHLAMM**
SYSTEM AND METHOD FOR REPROCESSING BILGE WATER AND SLUDGE
INSTALLATION ET PROCÉDÉ DE TRAITEMENT D'EAU DE FOND DE CALE ET DE BOUE

(30) Priorität: 05.07.2012 DE 102012106019
(43) Veröffentlichungstag der Anmeldung: 13.05.2015
(73) Patentinhaber: GEA Mechanical Equipment GmbH, 59302 Oelde (DE)
(72) Erfinder: WITTE, Klaus-Rainer, 59269 Beckum (DE)
(74) Vertreter: Specht, Peter
(86) Internationale Anmeldenummer: PCT/EP2013/063769
(87) Internationale Veröffentlichungsnummer: WO 2014/005967

(56) Entgegenhaltungen:
- WO-A1-00/29334

## Beschreibung

Die vorliegende Erfindung betrifft eine Anlage und ein Verfahren zur Aufarbeitung von Bilgewasser.

Bilgewasser entsteht beim Betrieb auf Schiffen, darf aber aufgrund gesetzlicher Vorschriften nicht ungereinigt ins Meer abgeleitet werden. Von daher ist es von Interesse, das Bilgewasser direkt an Bord von Schiffen soweit aufzuarbeiten bzw. zu reinigen, dass es nach der Reinigung direkt ins Meer abgeleitet werden kann. Hierzu werden Sedimente in Form einer Schlammphase und Ölrückstände in Form einer Ölphase aus dem Bilgewasser abgetrennt, welche in der Regel in einem gemeinsamen Schlammsammeltank zusammen mit Schlammrückstanden aus anderen Prozessen gelagert werden, beispielsweise, bis das Schiff einen Hafen anfährt.

Aus der WO 00/29334 A1 ist eine Anlage zur Reinigung von Bilgewasser bekannt, welche folgendes aufweist: einen Bilgewassertank für Bilgewasser, einen Reaktortank zum Erhitzen des Bilgewasser, eine Station zur Zugabe von Chemikalien nach dem Tank, eine Zentrifuge zur Abtrennung einer Ölphase und einer feststoffartigen Schlammphase aus dem zu reinigenden Bilgewasser, einen Schlammsammeltank zum Sammeln der abgetrennten Schlammphase und einen Ölsammeltank zum Sammeln der abgetrennten Ölphase, wobei aus dem der Schlammsammeltank und dem Ölsammeltank Rückführleitungen in den Reaktortank münden.

Da oftmals die Kapazität des Schlammsammeltanks begrenzt ist, ist es von Interesse, die Menge der im Schlammsammeltank zu lagernden Flüssigkeit weiter zu verringern.

Die Lösung dieses Problems ist die Aufgabe der Erfindung.

Die Erfindung löst diese Aufgabe durch eine Anlage mit den Merkmalen des Anspruchs 1 und ein Verfahren mit den Merkmalen des Anspruchs 10.

Durch die Rückführung von im Schlammsammeltank gesammelten Produkten - hier insbesondere einer im Schlammsammeltank abgesetzten wässrigen Schlammphase - in die Zentrifuge kann eine zweite zentrifugale Aufarbeitung/Reinigung des rückgeführten Teiles der Feststoff- bzw. Schlammphase erfolgen, wodurch insgesamt die Menge an ableitbarem Wasser erhöht bzw. die Menge an Schlammphase weiter verringert werden kann, so dass es länger dauert, bis der Schlammsammeltank seinen maximalen Füllstand erreicht. Es werden zudem gegenüber der der WO 00/29334 A1 weniger Tanks benötigt.

### Vorteilhafte Ausgestaltungen sind Gegenstand der Unteransprüche

Vorzugsweise ist hinter dem Schlammsammeltank ein Rückschlagventil in die Rückführleitung geschaltet, um eine Rückströmen des Schlammes in diesen Sammeltank zu verhindern.

Es kann ferner in der Rückführleitung eine Pumpe - vorzugsweise eine geregelte Schlammpumpe - angeordnet sein, welche ein dosiertes Rückführen/-leiten der Schlammphase ermöglicht.

Dabei ist es weiter bevorzugt, wenn hinter dem Rückschlagventil und hinter der Einmündung der Rückführleitung in die Leitung eine Bilgewasserpumpe P1 in der Leitung L1 angeordnet ist

Vorzugsweise ist die Leistung der Bilgewasserpumpe größer ist als die der Schlammpumpe.

Um die Leistung der Bilgewasserpumpe optimal zu nutzen, ist es von Vorteil, wenn die Leitung, in welche die Rückführleitung für die Schlammphase mündet, zwischen dem Bilgewassertank für Bilgewasser und der Bilgewasserpumpe angeordnet ist.

Vorzugsweise ist die Leistung der Bilgewasserpumpe stets höher als die Leistung der Schlammpumpe, so dass ein Weitertransport in Richtung der Zentrifuge erfolgt. Ein hinter dem Bilgewassertank hin angeordnetes Rückschlagventil verhindert dabei vorzugsweise sowie in vorteilhafter Weise einen Weitertransport des Schlammes in den Bilgewassertank für Bilgewasser, falls die Bilgewasserpumpe ausfällt.

Da es im vorrangigen Interesse ist, im Wesentlichen nur die Schlammphase, nicht aber auch einen Teil der abgetrennten Ölphase nochmals aufzuarbeiten, ist es von Vorteil, wenn die Rückführung im Boden und/oder an einer Wandung im unteren Drittel des Schlammsammeltanks angeordnet ist. Der Schlammsammeltank wirkt dabei als eine Art Absetztank, in dem sich die schwerere wässrige Schlammphase im unteren Bereich des Tanks sammelt und in dem die Ölphase obenauf schwimmt.

Der Ölgehalt des Bilgewassers vor dessen Klärung wird vorzugsweise weniger als 25 Vol.% betragen, so dass bei der Zudosierung von Schlamm zu Bilgewasser darauf zu achten ist, dass die Schlammrückführung ab einem bestimmten Ölgehalt gestoppt wird, bis sich wieder mehr Schlamm mit höheren Wasseranteilen im Schlammsammeltank abgesetzt hat. Der Ölgehalt kann direkt durch eine Kontrollvorrichtung in der Rückführung oder der Leitung zur Zentrifuge hin oder indirekt durch einen Durchflussmesser im Wasserablauf der Zentrifuge überwacht werden.

Um die Effizienz des Verfahrens zusätzlich zu erhöhen, können vor der zentrifugalen Reinigung/Aufbereitung des Bilgewassers einer oder beide folgender Schritte durchgeführt werden: eine Filtration und/oder eine Erwärmung des Bilgewassers.

Das Rückführen der Schlammphase erfolgt vorzugsweise, bevor die Zentrifuge eine Entleerung durchführt.

Da die Schlammphase meist nur einen geringen Ölgehalt aufweist, kann diese getrennt verarbeitet werden, so dass dem Schlammsammeltank weniger Füllmasse zugeführt wird. Daher ist es von Vorteil, wenn der Schlamm in einem vom Schlammsammeltank räumlich-getrennten Tank aufkonzentriert wird.

Dieses Aufkonzentrieren kann durch Erhitzen, Filtrieren oder durch Trennung in einer Schlammentwässerungsvorrichtung ("sludge concentration unit") erfolgen.

Die Erfindung wird anhand von Ausführungsbeispielen mit den nachfolgenden Figuren näher beschrieben. Es zeigen:
- Fig. 1: eine erfindungsgemäße Anlage zur Aufarbeitung von Bilgewasser;
- Fig. 2: eine bereits bekannte Anlage zur Aufarbeitung von Bilgewasser; und
- Fig. 3: eine weitere Variante der erfindungsgemäßen Anlage.

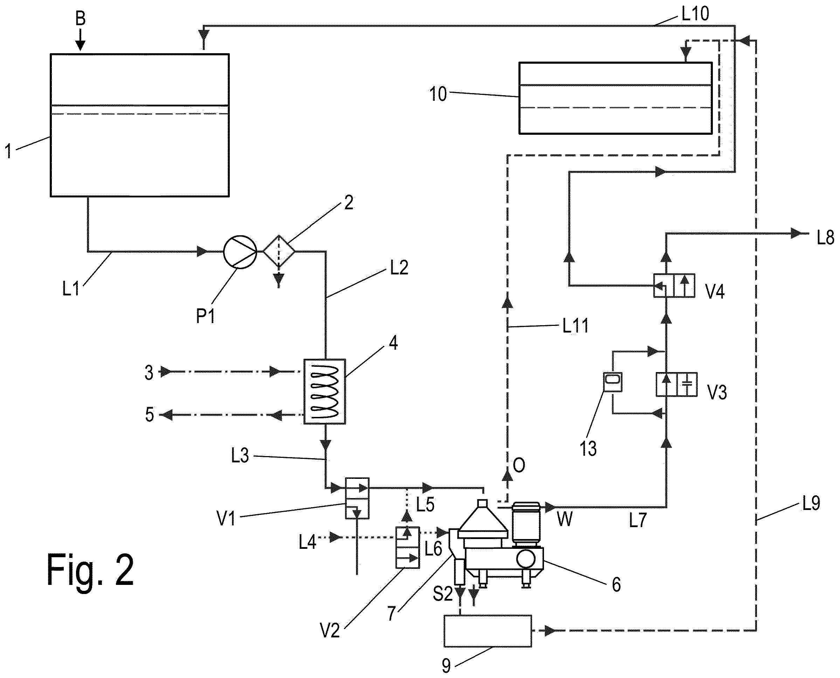

Fig. 2 zeigt eine bekannte Anlage zur Aufarbeitung von Bilgewasser, die zunächst beschrieben werden soll.

Bilgewasser sammelt/bildet sich üblicherweise im Maschinenraum eines Schiffes. Es kann sich beispielsweise aus Meer- und Kühlwasserleckagen, Kondenswasser oder Reinigungswasser bilden und enthält das eigentliche Wasser als Hauptbestandteil sowie in der Regel weitere Bestandteile wie Kraftstoff-, Schmieröl- oder andere Ölrückstände.

Problematisch daran ist, dass das Bilgewasser nicht unbehandelt oder einfach verdünnt ins Meer zurückgeführt werden darf. So gilt als ein Grenzwert für die Einleitung von Bilgewasser ins Meer außerhalb der sogenannten 12 Meilen-Zonen ein Ölgehalt von weniger als 15 ppm (Vorschrift der IMO). In besonderen Schutzgebieten liegt der erlaubte Ölgehalt z.T. auch bei max. 5 ppm. Daher ist das Vorhandensein eines zugelassenen und funktionsfähigen Bilgewasserentölers an Bord von Schiffen gesetzlich vorgeschrieben.

Mit der patentgemäßen Vorrichtung und dem Verfahren können diese Grenzwerte eingehalten werden.

In der in Fig. 2 abgebildeten bekannten Anlage zur Reinigung von Bilgewasser B in einen Bilgewassertank 1 das Bilgewasser des Schiffes eingeleitet und vorzugsweise dort gesammelt.

Vom Bilgewassertank 1 ausgehend wird das Bilgewasser durch eine Leitung L1 mittels einer Bilgewasserpumpe P1 zunächst durch eine Filteranlage 2 geleitet, um Feststoffpartikel S1 aus dem Wasser zu entfernen.

Das aus der Filteranlage austretende Wasser wird durch eine Leitung L2 weitergeleitet, vorzugsweise durch eine Heizeinrichtung wie einen Dampferhitzer 4, welcher einen Dampfzulauf 3 zum Einleiten von heißem Dampf und einen Kondensatablauf 5 zum Abführen von heißem Kondensat aufweist.

Aus der Heizeinrichtung strömt das erhitzte/erwärmte und damit insbesondere in Hinsicht auf die Ölbestandteile besser reinigbare Bilgewasser durch eine Leitung L3 und ein Umschaltventil V1 in eine Zentrifuge 6, vorzugsweise einen Separator, insbesondere einen Dreiphasen-Separator, wo im Zentrifugalfeld eine Trennung des Bilgewassers in eine Wasserphase W, eine Ölphase O und eine Schlammphase S erfolgt.

Der Zentrifuge 6 ist eine Prozesswasserleitung L4 zur Zugabe von Steuerwasser L6 und Füll- und Verdrängungswasser L5 zugeordnet, das über das Ventil V6 in die Schließkammer der Separatortrommel oder über das Ventil V5 in die Zuleitung L6 zur Zentrifuge 6 gegeben werden kann.

Das gereinigte Bilgewasser W wird durch eine Leitung L7 aus der Zentrifuge abgeleitet, zu der ein Ölmonitor 13 im Nebenstrom geschaltet ist (Ventil V3), um es kontinuierlich auf seinen Restölgehalt zu überwachen. Durch den Ölmonitor wird das Umschaltventil V4 gesteuert.

Liegt der Ölgehalt unter einem Sollwert von vorzugsweise 15 ppm - oder optional 5ppm - kann eine Entsorgung des geklärten Bilgewassers durch eine Ablaufleitung L8 ins Meer erfolgen. Liegt der Ölgehalt dagegen oberhalb eines vorgegebenen Sollwertes, so ist das Bilgewasser nicht ausreichend geklärt und wird über eine Rückführleitung L10 in den Bilgewasser-Sammeltank 1 zurückgeleitet.

Die aus der Zentrifuge 6 in einen Feststofffänger 7 ausgestoßene Schlammphase S2 wird in einem Zwischenbehälter 9 gesammelt und mit einer Pumpe durch die Leitung L9 in einen Schlammsammeltank 10 geleitet.

Die aus der Zentrifuge 6 abgeleitete Ölphase O wird aus dieser durch eine Leitung L11 abgeleitet, welche vorzugsweise in die Leitung L9 zum Einleiten der Schlammphase in den Schlammsammeltank 10 mündet oder direkt in den Schlammsammeltank 10.

Insgesamt bietet das Verfahren der Fig. 2 den besonderen Vorteil, dass der Hauptbestandteil des Bilgewassers, also das darin enthaltene Wasser, nach der Klärung in der Regel direkt ins Meer geleitet werden kann, so dass es bereits einer relativ geringen Lagerkapazität zum Sammeln und Lagern des Bilgewassers bedarf.

Diese Anlage und ein entsprechend zugehöriges Verfahren haben sich daher grundsätzlich bewährt, werden erfindungsgemäß aber nochmals wesentlich weiter entwickelt.

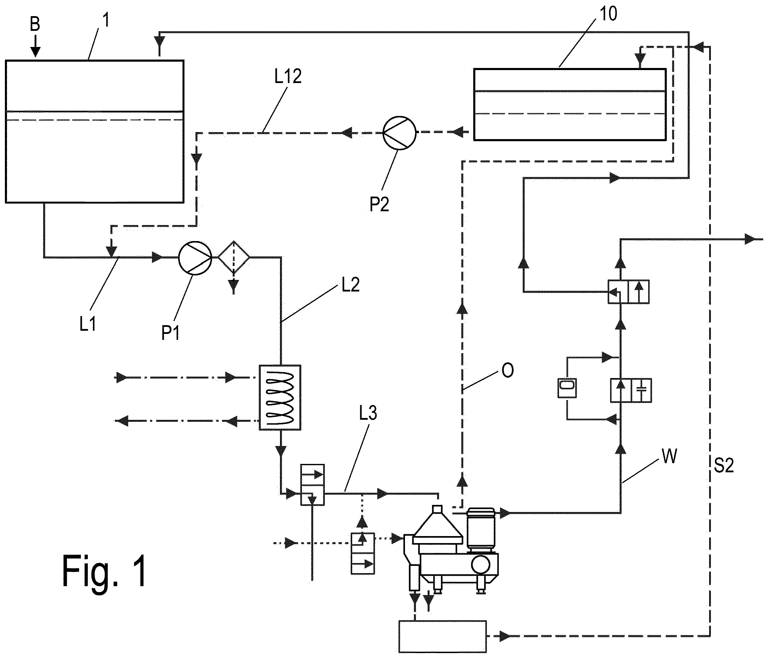

Fig. 1 zeigt eine erfindungsgemäße Anlage, welche über einen zur Fig. 2 ähnlichen Aufbau verfügt.

Die Anlage weist ergänzend zu den Komponenten der Figur 1 aber noch folgendes Merkmal auf: eine Rückführleitung L12, mit welcher Flüssigkeit, insbesondere eine noch fließfähige, wässrige Schlammphase aus dem Schlammsammeltank 10 in eine der zwischen dem Bilgewasser-Sammeltank 1 und der Pumpe P1 geschalteten Leitung in die Zentrifuge 6 zurückgeführt werden kann.

Diese Rückführung ist aus folgenden Gründen besonders vorteilhaft.

Der Schlammsammeltank 10 wirkt als eine Art Absetztank, in welchem sich nach und nach die (noch wasserhaltige) Schlammphase S2 absetzt, während die ölhaltige Phase O auf der Schlammphase S2 schwimmt. Durch das Rückführen der abgesetzten Schlammphase S2 aus dem Schlammsammeltank 10 durch die Rückführleitung L12 wird der Pegel im Schlammsammeltank 10 gesenkt, so dass er ein größeres Volumen an Schlamm und Öl aufnehmen kann.

Vorzugsweise und besonders vorteilhaft mündet die Rückführleitung L12 aus dem Schlammsammeltank 10 in die (Saug-)Leitung L1 zwischen dem Schlammsammeltank 10 und der Bilgewasserzulaufpumpe P1.

Vorzugsweise ist in der Leitung L1 ein Rückschlagventil (nicht dargestellt) angeordnet, so dass kein Rückströmen der wässrigen Schlammphase S2 aus dem Schlammsammeltank 10 in das vergleichsweise dazu sauberere Bilgewasser des Bilgewassertanks 1 erfolgen kann.

Da die Druckverhältnisse bei wässrigen Schlammphasen ein Problem hinsichtlich der Druckfestigkeit der Leitungen darstellen können, weist eine der Leitungen L1, L12 oder weisen beide Leitungen L1, L12 vorzugsweise ein (hier nicht dargestelltes) Überdruckventil auf.

In Fig. 1 übernimmt die Rückführung der wässrigen Phase eine (Schlamm-)Pumpe P2, welche vorzugsweise im Betrieb mit einer geringeren Leistung, vorzugsweise mit weniger als 15% der Leistung der Bilgewasserpumpe P1 arbeitet.

Die Rückführung kann kontinuierlich oder aber auch nur zeitweise erfolgen. Durch die Rückführung der Schlammphase wird diese mit dem in die Zentrifuge zu leitenden Bilgewasser vermischt und gemeinsam mit diesem gereinigt, was insgesamt den Wassergehalt in der Schlammphase gegenüber der Anlage der Fig. 2 verringert. Derart wird in einfacher Weise die entsorgbare Menge an gereinigter Bilgewasserphase W erhöht bzw. das im Schlammsammeltank 10 zu speichernde Volumen pro Bilgewasservolumeneinheit verringert.

Vorzugsweise wird die Rückführung durch die Leitung L12 bzw. es wird die Pumpe P2 gestoppt, wenn ein Entleerungsprogramm der Zentrifuge startet (wenn diese eine Kolbenschieberentleerungsfunktion aufweist) oder wenn ein Alarm ausgelöst worden ist.

Der Filter 2 kann genutzt werden, um festzustellen, ob der Schlammgehalt im Zulauf zur Zentrifuge zu hoch ist. In diesem Fall wird die Pumpe P2 gestoppt.

Ein Drucktransmitter und eine Vibrationsüberwachung erhöhen die Sicherheit ggf. weiter.

Vorzugsweise ist hinter dem Schlammsammeltank 10 ein Rückschlagventil (nicht dargestellt) in die Rückführleitung L12 geschaltet, um ein eventuelles Rückströmen des Bilgewassers in diesen Behälter zu verhindern. Besonders vorteilhaft ist ferner hinter dem Rückschlagventil und hinter der Einmündung der Rückführleitung L12 in die Leitung L1 die Bilgewasserpumpe P1 in die Leitung L1 geschaltet.

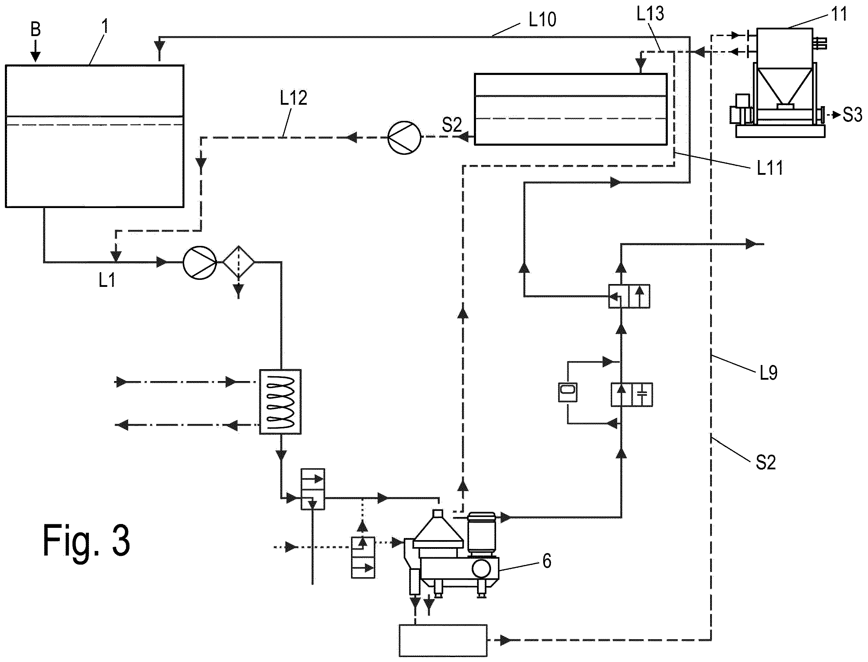

Fig. 3 zeigt eine weitere bevorzugte Weiterentwicklung, in welcher die Anlage der Fig. 1 noch ergänzend um eine Schlamm-Aufkonzentrationsvorrichtung ("sludge concentration unit") - hier ein Absetzbehälter (oder insbesondere eine Presse) 11 zum Entwässern der aus der Zentrifuge ausgestoßenen Schlammphase S2 ergänzt wird, welche in die Leitung L9 geschaltet ist. Mit dieser Vorrichtung 11 wird die Schlammphase zusätzlich aufkonzentriert, wobei die Flüssigkeitsphase aus dem Schlamm vorzugsweise statisch abgesetzt wird. Die abgesetzte Flüssigkeitsphase kann durch eine Leitung L13 in den Schlammsammeltank 10 zurückgeleitet werden, der vorzugsweise die Rückführleitung L12 (der Fig. 1) aufweist. Der Schlamm S3 kann dann getrennt von der ölhaltigen Phase entsorgt werden. Zudem wird derart der Schlammgehalt im Sammeltank 10 für den Schlamm verringert, was sich positiv auf die Rückleitbarkeit durch die Leitung L12 auswirkt.

### Bezugszeichenliste

- P1, P2: Pumpen
- L1, L2, ....: Leitungen
- S1: Feststoffpartikel
- S2: Schlammphase
- S3: Schlamm
- O, W: Öl- und Wasserphasen
- B: Bilgewasser
- V1, V2, ...: Ventile

- 1: Bilgewasser-Sammeltank
- 2: Filteranlage
- 3: Dampfzulauf
- 4: Dampferhitzer
- 5: Kondensatablauf
- 6: Zentrifuge
- 7: Feststofffänger
- 8: Kontrolleinrichtung
- 9: Zwischentank
- 10: Schlammsammeltank
- 11: Schlamm-Aufkonzentrationsvorrichtung

## Patentansprüche

1. Anlage zur Reinigung von Bilgewasser, welche zumindest folgende Merkmale aufweist:
A) einen Bilgewassertank (1) für Bilgewasser,
B) eine Zentrifuge (6) zur Abtrennung einer Ölphase (O) und einer feststoffartigen Schlammphase (S2) aus dem zu reinigenden Bilgewasser, und
C) einen Schlammsammeltank (10) zum Sammeln der abgetrennten Ölphase (O) und der Schlammphase (S2), wobei der Schlammsammeltank (10) als ein Absetztank wirkt, in dem sich die schwerere wässrige Schlammphase im unteren Bereich des Tanks sammelt und in dem die Ölphase obenauf schwimmt,
**dadurch gekennzeichnet, dass**
D) der Schlammsammeltank (10) eine Rückführleitung (L12) aufweist, welche in eine Leitung (L1) mündet, die zwischen dem Bilgewassertank (1) für Bilgewasser und der Zentrifuge (6) angeordnet ist, wobei die Rückführleitung (L12) im Boden und/oder an einer Wandung im unteren Drittel des Schlammsammeltanks (10) angeordnet ist und wobei die Rückführleitung (L12) zum zumindest teilweisen Zurückführen von Schlammphase (S2) vom Schlammsammeltank (10) in die Zentrifuge (6) oder in ein vor die Zentrifuge (6) geschaltetes Element der Anlage geeignet und vorgesehen ist.

2. Anlage nach Anspruch 1, **dadurch gekennzeichnet, dass** hinter dem Schlammsammeltank (10) ein Rückschlagventil in die Rückführleitung (L12) geschaltet ist.

3. Anlage nach Anspruch 1 oder 2, **dadurch gekennzeichnet, dass** hinter dem Bilgewassertank ein Rückschlagventil in die Leitung (L1) geschaltet ist, in welche die Rückführleitung (L12) mündet.

4. Anlage nach Anspruch 3, **dadurch gekennzeichnet, dass** hinter dem Rückschlagventil, das in die Leitung (L1) geschaltet ist, in welche die Rückführleitung (L12) mündet, und hinter der Einmündung der Rückführleitung (L12) in die Leitung (L1) eine Bilgewasserpumpe (P1) in die Leitung (L1) geschaltet ist.

5. Anlage nach Anspruch 4, **dadurch gekennzeichnet, dass** die Leistung der Bilgewasserpumpe (P1) größer ist als die einer Schlammpumpe (P2) in der Rückführleitung (L12).

6. Anlage nach einem der vorhergehenden Ansprüche, **dadurch gekennzeichnet, dass** die Leitung (L1), in welche die Rückführleitung (L12) mündet, eine Saugleitung (L1) ist.

7. Anlage nach einem der vorhergehenden Ansprüche 5 bis 6, **dadurch gekennzeichnet, dass** die Leistung der Schlammpumpe (P2) in der Rückführleitung (L12) im Betrieb weniger als 25%, vorzugsweise weniger als 15% der Leistung der Bilgewasserpumpe (1) beträgt.

8. Anlage nach einem der vorhergehenden Ansprüche, **dadurch gekennzeichnet, dass** sie eine Schlamm-Aufkonzentrationsvorrichtung (11) aufweist, welche in eine Leitung (L9) geschaltet ist, durch welche die aus der Zentrifuge (6) in einen Feststofffänger (7) ausgestoßene Schlammphase (S2) in den Schlammsammeltank (10) geleitet wird.

9. Verfahren zur kombinierten Aufarbeitung von Bilgewasser und Schlamm mit einer Anlage nach einem der vorstehenden Ansprüche, mit den folgenden Schritte:
a) Bereitstellen von Bilgewasser in einem Bilgewassertank (1);
b) Weiterleiten des Bilgewassers vom Bilgewassertank (1) in eine Zentrifuge (6);
c) Reinigen des Bilgewassers unter Abtrennen einer Ölphase (O) und einer Schlammphase von einer Wasserphase (W) in einer Zentrifuge (6), vorzugsweise einem Separator;
d) Sammeln der Schlammphase (S2) und der Ölphase (O) in einem Schlammsammeltank (10), der als ein Absetztank wirkt, in dem sich die schwerere wässrige Schlammphase im unteren Bereich des Tanks sammelt und in dem die Ölphase obenauf schwimmt; und
e) zumindest teilweises Rückführen von Schlammphase (S2) vom Schlammsammeltank (10) in die Zentrifuge (6) oder in ein vor die Zentrifuge (6) geschaltetes Element der Anlage.

10. Verfahren nach Anspruch 9, **dadurch gekennzeichnet, dass** der Ölgehalt des Bilgewassers vor dessen Klärung weniger als 25 Vol.% beträgt.

11. Verfahren nach Anspruch 9 oder 10, **dadurch gekennzeichnet, dass** während des Weiterleitens des Bilgewassers, gemäß Schritt b), eine Filtration und/oder eine Erwärmung des Bilgewassers erfolgen.

12. Verfahren nach einem der vorhergehenden Ansprüche 9 bis 11, **dadurch gekennzeichnet, dass** das Rückführen, gemäß Schritt e), unterbrochen wird, sofern eine Feststoffentleerung des Separators durchgeführt wird oder wenn ein Alarm ausgelöst wird. Bemerkung: Alarm kann sein:
Temperatur zu hoch, Schwingungsgrenzwerte des Separators überschritten, etc.

13. Verfahren nach einem der vorhergehenden Ansprüche 9 bis 12, **dadurch gekennzeichnet, dass** der Feststoffgehalt der aus der Zentrifuge abgeleiteten Schlammphase (S2) vor dem Einleiten in den Schlammsammeltank (10) weiter verringert wird.

14. Verfahren nach Anspruch 13, **dadurch gekennzeichnet, dass** die Verringerung des Feststoffgehaltes mit einer Presse oder in einem Absetzbehälter (11) erfolgt.

## Claims

1. A system for the purification of bilge water, which has at least the following features:
A) a bilge water tank (1) for bilge water,
B) a centrifuge (6) for separating an oil phase (O) and a solid-like sludge phase (S2) out of the bilge water to be purified, and
C) a sludge collection tank (10) for collecting the separated oil phase (O) and the sludge phase (S2), wherein the sludge collection tank (10) acts as a settling tank, in which the heavier aqueous sludge phase collects in the lower region of the tank and in which the oil phase floats on top,
**characterized in that**
D) the sludge collection tank (10) has a recirculation line (L12) which issues into a line (L1) which is arranged between the bilge water tank (1) for bilge water and the centrifuge (6), wherein the recirculation line (L12) is arranged in the bottom and/or on a wall in the lower third of the sludge collection tank (10) and wherein the recirculation line (L12) is suitable and provided for the at least partial recirculation of sludge phase (S2) from the sludge collection tank (10) into the centrifuge (6) or into a system element connected upstream of the centrifuge.

2. The system as claimed in claim 1, **characterized in that** a non-return valve is connected into the recirculation line (L12) downstream of the sludge collection tank (10).

3. The system as claimed in claim 1 or 2, **characterized in that** downstream of the bilge water tank a non-return valve is connected into the line (L1), into which the recirculation line (L12) issues.

4. The system as claimed in claim 3, **characterized in that** downstream of the non-return valve, which is connected into the line (L1), into which the recirculation line (L12) issues, and downstream of the issue of the recirculation line (L12) into the line (L1) a bilge water pump (P1) is connected into the line (L1).

5. The system as claimed in claim 4, **characterized in that** the power of the bilge water pump (P1) is higher than that of a sludge pump (P2) in the recirculation line (L12).

6. The system as claimed in one of the preceding claims, **characterized in that** the line (L1) into which the recirculation line (L12) issues is a suction line (L1).

7. The system as claimed in one of the preceding claims 5 to 6, **characterized in that**, during operation, the power of the sludge pump (P2) in the recirculation line (L12) amounts to less than 25%, preferably to less than 15%, of the power of the bilge water pump (1).

8. The system as claimed in one of the preceding claims, **characterized in that** it has a sludge upgrading device (11) being connected into a line (L9), through which the sludge phase (S2) expelled from the centrifuge (6) into a solids trap (7) is conducted into the sludge tank (10).

9. A method for the combined reprocessing of bilge water and sludge by means of a system as claimed in one of the preceding claims, **characterized by** the following steps:
a) provision of bilge water in a bilge water tank (1);
b) transfer of the bilge water from the bilge water tank (1) into a centrifuge (6);
c) purification of the bilge water, along with the separation of an oil phase (O) and of a sludge phase from a water phase (W), in a centrifuge (6), preferably a separator;
d) collection of the sludge phase (S2) and of the oil phase (O) in a sludge collection tank (10), which acts a settling tank, in which the heavier aqueous sludge phase collects in the lower region of the tank and in which the oil phase floats on top; and
e) at least partial recirculation of sludge phase (S2) from the sludge collection tank (10) into the centrifuge (6) or into a system element connected upstream of the centrifuge.

10. The method as claimed in claim 9, **characterized in that** the oil content of the bilge water before its clarification amounts to less than 25% by volume.

11. The method as claimed in claim 9 or 10, **characterized in that**, during the transfer of the bilge water according to step b), a filtration and/or heating of the bilge water take(s) place.

12. The method as claimed in one of the preceding claims 9 to 11, **characterized in that** the recirculation according to step e) is interrupted in so far as emptying of solids from the separator is carried out or when an alarm is triggered. Note: an alarm may be: temperature too high, oscillation limit values of the separator exceeded, etc.

13. The method as claimed in one of the preceding claims 9 to 12, **characterized in that** the solid content of the sludge phase (S2) discharged from the centrifuge is reduced further before introduction into the sludge collection tank (10).

14. The method as claimed in claim 13, **characterized in that** the reduction in the solid content takes place by means of a press or in a settling tank (11).

## Revendications

1. Installation pour l'épuration d'eau de cale, présentant au moins les caractéristiques suivantes :
A) un réservoir à eau de cale (1) pour l'eau de cale,
B) une centrifugeuse (6) pour séparer une phase huileuse (O) et une phase boueuse (S2) contenant des solides de l'eau de cale à épurer, et
C) un réservoir de collecte des boues (10) pour recueillir la phase huileuse (O) et la phase boueuse (S2), le réservoir de collecte des boues (10) faisant office de cuve de décantation dans laquelle la phase boueuse aqueuse lourde s'accumule dans la partie inférieure de la cuve et dans laquelle la phase huileuse surnage,
**caractérisée en ce que**
D) le réservoir de collecte des boues (10) présente une conduite de retour (L12) qui débouche dans une conduite (L1) disposée entre le réservoir à eau de cale (1) pour l'eau de cale et la centrifugeuse (6), la conduite de retour (L12) étant disposée dans le fond et/ou sur une paroi dans le tiers inférieur du réservoir de collecte des boues (10) et la conduite de retour (L12) étant adaptée et prévue pour ramener au moins en partie la phase boueuse (S2) du réservoir de collecte des boues (10) dans la centrifugeuse (6) ou dans un élément de l'installation monté en amont de la centrifugeuse (6).

2. Installation selon la revendication 1, **caractérisée en ce qu'**un clapet antiretour est monté derrière le réservoir de collecte des boues (10) dans la conduite de retour (L12).

3. Installation selon la revendication 1 ou 2, **caractérisée en ce qu'**un clapet antiretour est monté derrière le réservoir à eau de cale dans la conduite (L1) dans laquelle débouche la conduite de retour (L12).

4. Installation selon la revendication 3, **caractérisée en ce qu'**une pompe à eau de cale (P1) est montée dans la conduite (L1) derrière le clapet antiretour monté dans la conduite (L1) dans laquelle débouche la conduite de retour (L12) et derrière le débouché de la conduite de retour (L12) dans la conduite (L1).

5. Installation selon la revendication 4, **caractérisée en ce que** la puissance de la pompe à eau de cale (P1) est supérieure à celle d'une pompe à boues (P2) dans la conduite de retour (L12).

6. Installation selon l'une des revendications précédentes, **caractérisée en ce que** la conduite (L1) dans laquelle débouche la conduite de retour (L12) est une conduite d'aspiration (L1).

7. Installation selon l'une des revendications 5 à 6, **caractérisée en ce que** la puissance de la pompe à boues (P2) dans la conduite de retour (L12) représente en fonctionnement moins de 25 %, de préférence moins de 15 %, de la puissance de la pompe à eau de cale (1).

8. Installation selon l'une des revendications précédentes, **caractérisée en ce qu'**elle comporte un dispositif de concentration des boues (11) qui est monté dans une conduite (L9) par laquelle la phase boueuse (S2) éjectée par la centrifugeuse (6) dans un piège à solides (7) est acheminée vers le réservoir de collecte des boues (10).

9. Procédé pour le traitement combiné d'eau de cale et de boues avec une installation selon l'une des revendications précédentes, comprenant les étapes suivantes :
a) mise à disposition d'eau de cale dans un réservoir à eau de cale (1) ;
b) acheminement de l'eau de cale du réservoir à eau de cale (1) à une centrifugeuse (6) ;
c) épuration de l'eau de cale en séparant une phase huileuse (O) et une phase boueuse d'une phase aqueuse (W) dans une centrifugeuse (6), de préférence un séparateur ;
d) collecte de la phase boueuse (S2) et de la phase huileuse (O) dans un réservoir de collecte des boues (10) faisant office de cuve de décantation dans laquelle la phase boueuse aqueuse lourde s'accumule dans la partie inférieure de la cuve et dans laquelle la phase huileuse surnage et
e) renvoi au moins partiel de la phase boueuse (S2) du réservoir de collecte des boues (10) vers la centrifugeuse (6) ou vers un élément de l'installation monté en amont de la centrifugeuse (6).

10. Procédé selon la revendication 9, **caractérisé en ce que** la teneur en huile de l'eau de cale avant son épuration est inférieure à 25 % du volume.

11. Procédé selon la revendication 9 ou 10, **caractérisé en ce qu'**une filtration et/ou un chauffage de l'eau de cale sont réalisés pendant l'acheminement de l'eau de cale selon l'étape b).

12. Procédé selon l'une des revendications 9 à 11, **caractérisé en ce que** le retour selon l'étape e) est interrompu tant qu'un vidage des solides du séparateur est effectué ou quand une alarme est déclenchée, l'alarme pouvant signaler une température trop élevée, un dépassement de la limite de vibrations du séparateur, etc.

13. Procédé selon l'une des revendications 9 à 12, **caractérisé en ce que** la teneur en solides de la phase boueuse (S2) extraite de la centrifugeuse est encore réduite avant l'introduction dans le réservoir de collecte des boues (10).

14. Procédé selon la revendication 13, **caractérisée en ce que** la réduction de la teneur en solides est réalisée avec une presse ou dans un réservoir de décantation (11).
